# EUROPEAN PATENT SPECIFICATION

(11) **EP 3 184 157 B1**
(45) Date of publication and mention of the grant of the patent: **12.06.2019**
(21) Application number: 15833958.0
(22) Date of filing: 11.03.2015
(51) Int. Cl.: B01D 15/08, G01N 1/34, B01D 15/22, G01N 1/40

(54) **QUICK EXTRACTION KIT FOR AGRICULTURAL PRODUCT PESTICIDE RESIDUE DETECTION PROCEDURE AND METHOD FOR OBTAINING STOCK SOLUTION OF DETECTION SOLUTION FROM AGRICULTURAL PRODUCT SAMPLE**
SCHNELLES EXTRAKTIONSKIT FÜR DEN NACHWEIS VON PESTIZIDRÜCKSTÄNDEN IN LANDWIRTSCHAFTLICHEN PRODUKTEN UND VERFAHREN ZUR HERSTELLUNG EINER STAMMLÖSUNG EINER NACHWEISLÖSUNG AUS EINER PROBE EINES LANDWIRTSCHAFTLICHEN PRODUKTS
KIT D'EXTRACTION RAPIDE POUR PROCÉDURE DE DÉTECTION DE RÉSIDUS DE PESTICIDES DANS UN PRODUIT AGRICOLE ET PROCÉDÉ PERMETTANT D'OBTENIR UNE SOLUTION MÈRE DE SOLUTION DE DÉTECTION À PARTIR D'UN ÉCHANTILLON DE PRODUIT AGRICOLE

(30) Priority: 19.08.2014 CN 201410409684
(43) Date of publication of application: 28.06.2017
(73) Proprietor: Agricultural Chemicals And Toxic Substances Research Institute, Council Of Agriculture, Executive Yuan, Taichung City, Taiwan 41358 (CN)
(72) Inventor: LIN, Shao-Kai, Taichung City 41358 (TW); CHUANG, Wei-Chen, Taichung City 41358 (TW); CHEN, Jou-Wen, Taichung City 41358 (TW)
(74) Representative: Pallini Gervasi, Diego
(86) International application number: PCT/CN2015/074011
(87) International publication number: WO 2016/026286

(56) References cited:
- WO-A1-01/36067
- CN-A- 102 596 348
- CN-A- 102 645 498
- CN-U- 202 631 493
- CN-U- 202 631 493
- US-A1- 2010 258 494
- GILBERT-LOPEZ B ET AL: "Sample treatment and determination of pesticide residues in fatty vegetable matrices: A review", TALANTA, ELSEVIER, AMSTERDAM, NL, vol. 79, no. 2, 15 July 2009 (2009-07-15), pages 109-128, XP026221438, ISSN: 0039-9140, DOI: 10.1016/J.TALANTA.2009.04.022 [retrieved on 2009-04-18]

## Description

### Field of the Invention

The present invention relates to a quick extraction kit adapted to a procedure of detecting pesticide residues in agricultural products.

### Description of the Prior Art

It has been widespread to apply pesticides on crops for discouraging the pests to increase agricultural production. Based on food safety requirements, all countries in the world have set standards for pesticide residue testing to establish Maximum Residue Limits. For Determination of pesticide residues in fruits, vegetables, grains, dried beans, tea, spice and other herbaceous plants, a conventional detection method is sampling, and then pre-treating the sample by the QuEChERS method (Quick, Easy, Cheap, Effective, Rugged, Safe) to get a primary test liquid which is dewatered and purified. Next, the primary test liquid is processed to form a test liquid suitable for being detected in instruments. The test liquid is detected by a liquid chromatography/tandem mass spectrometer (LC/MS-MS) or a gas chromatography/tandem mass spectrometer (GC/MS-MS), and finally, data of the detected result of said instruments is processed to obtain a result of pesticide residues detection.

It takes much time for sample pretreatment by the method above. The QuEChERS method needs to carry out following steps:
Granulating the sample by a blender to obtain a homogenized sample for increasing contact area of the sample;
Weighing proper quantity of the sample, such as 10 grams;
Adding an extraction solvent, such as acetonitrile solution, into the homogenized sample, then strongly shaking the homogenized sample with the extraction solvent for a period of time to form an extraction liquid, the ratio of the homogenized sample and the extraction solvent is 1:1 in weight and volume, for example, each 10 grams of sample need to be added 10 ml of acetonitrile solution;
Adding proper quantity of a mixture buffer agent, such as 6.5 grams, into the extraction liquid, wherein the mixture buffer agent has components comprising 4 grams of anhydrous magnesium sulfate, 1 gram of sodium chloride, 1 gram of trisodium citrate and 0.5 gram of disodium hydrogen citrate;
Strongly shaking the extraction liquid added with the mixture buffer agent for a period of time by a high-speed tissue grinding & shaking homogenizer, then centrifuging the extraction liquid added with the mixture buffer agent to make the extraction liquid stratified by a centrifuge;
Taking proper quantity of a supernatant of the extraction liquid, such as 6 ml; and
Based on the type of the sample, adding different adsorbents into the supernatant. For example, when the sample is fruit, vegetable or grains, the adsorbent is a mixture of 150 mg of PSA (primary secondary amine, N-propyl ethylenediamine) and 900 mg of anhydrous magnesium sulfate; if the sample is tea, the adsorbent is a mixture of 450 mg of PSA and 900 mg of anhydrous magnesium sulfate; if the sample comprises carotenoid, the adsorbent is a mixture of 150 mg of PSA, 855 mg of anhydrous magnesium sulfate and 15 mg of graphitized carbon black (GCB). Besides, if the sample contains high quantity of chlorophyll, the adsorbent is a mixture of 150 mg of PSA, 855 mg of anhydrous magnesium sulfate and 45 mg of GCB.

Afterward, the supernatant added with the adsorbent is strongly shaken for a period of time by the high-speed tissue grinding & shaking homogenizer and then centrifuged by the centrifuge to obtain a centrifugal liquid for a primary test liquid.

The primary test liquid still should be treated by some steps to become the test liquid which is capable of being detected by instruments. For example, the primary test liquid is separately treated by a step of air drying, a step of adding methanol, acetone or hexane, a step of adding formic acid and a step of filtering by a filter membrane in sequence.

It takes about two hours to obtain the required primary test liquid from the sample by the QuEChERS method which apparently would slow down the speed of the procedure of detecting pesticide residues and make it impossible to quickly obtain the result of detecting pesticide residues. In view of this, it is important to provide an easier and faster method to obtain the required primary test liquid from the sample and solve said problem.

A solid phase extraction column to obtain a primary test liquid from a sample has been disclosed in the patent of CN103111091. However, the sample has to be treated in the processes of shaking, twice-centrifuging, water-bathing and rotary evaporating to obtain a concentrated solution. The solid phase extraction column also needs to be treated by adding anhydrous sodium sulfate first and washing with acetonitrile-methyl benzene. Then, the concentrated solution is added into the treated solid phase extraction column to obtain the primary test liquid. Although the solid phase extraction column of said patent is filled in two layers of different materials (the upper layer consists of amino Silica NH₂ and amide-modified polyethylene divinylbenzene, the bottom layer consists of graphite carbon), it still need much time for treating the sample and the solid phase extraction column to obtain the primary test liquid from the sample by the solid phase extraction column.

A solid phase extraction column has been disclosed in the patent of CN202631493, the solid phase extraction column is filled by three layers which are PSA, HBL and GCB. Because of these three layers all are absorbents, if the solid phase extraction column is used in the QuEChERS method mentioned above, the sample still needs the treatments of adding the mixture buffer agent, shaking and centrifuging after adding the extraction solvent. The primary test liquid then is obtained from the sample by the solid phase extraction column.

A similar technique has been disclosed in the patent of CN103055540. This patent has disclosed a purified column which is filled by a monolayer adsorbing filter. The adsorbing filter is a filter mixture of N-propyl ethylenediamine and anhydrous magnesium sulfate, a filter mixture of multi-walled carbon nanotubes and anhydrous magnesium sulfate, or a filter mixture of PSA, anhydrous magnesium sulfate, multi-walled carbon nanotubes and GCB. Similarly, these filter mixtures are used for absorbents. Like the patent of

CN202631493, even utilizing the purified column in the QuEChERS method, it also takes much time to obtain the primary test liquid for the sample treated by adding a mixture buffer agent, shaking and centrifuging.

Besides, the patent of U.S. Pat. No. 6,541,273 has disclosed a solid phase extraction cartridge filled in multi-layer absorbents, but it still spends much time to centrifuge a sample before obtaining a primary test liquid. Moreover, the U.S. patent publication No. 2010/258494 A1 has disclosed a micro-adsorption column for drying and/or purification of dissolved organic or biological analytes. The micro-adsorption column could comprise a first desiccant layer comprised of magnesium sulphate and a second purification or adsorbent layer containing C8 or C18 hydrocarbon.

From the above description, obviously, it is impossible to quickly obtain the result of detection by the QuEChERS method, which spends too much time to obtain the primary test liquid. However, this problem is obviously unable to be solved by the solid phase extraction column of the prior art.

### Summary of the Invention

To solve the aforementioned problems, an exemplary embodiment of the invention provides a quick extraction kit and a method of obtaining a primary test liquid from an agricultural sample by the quick extraction kit, which are able to significantly enhance the speed of the procedure of detecting pesticide residues.

The quick extraction kit is adapted to a procedure of detecting pesticide residues in agricultural products, and the quick extraction kit comprises a pipe, a first powder mixture layer and a second powder mixture layer. The pipe has
an output port located at the bottom of the pipe and an input port located at the top of the pipe, the input port is adapted to be input a sample solution, and the sample solution is a mixture solution obtained by treatment of shaking homogenized fragments of an agricultural sample with an extraction solvent. The first powder mixture layer is in a form of powder and filled in the pipe, the first powder mixture layer has components, comprising 0.2 to 2 g of anhydrous magnesium sulfate powder, 0.1 to 1 g of sodium chloride powder, 0.1 to 1 g of trisodium citrate powder, and 0.5 to 1 g of disodium hydrogen citrate powder. The second powder mixture layer is in a form of powder, filled in the pipe and between the first powder mixture layer and the output port; the second powder mixture layer has components, comprising 0.01 to 0.5 g of a primary secondary amine (PSA) powder and 0.2 to 1 g anhydrous magnesium sulfate powder..

The first powder mixture layer is capable of absorbing the most water of the sample solution and buffering pH value of the sample solution when the sample solution flows through the first powder mixture layer. The second powder mixture layer is capable of absorbing the rest water of the sample solution and absorbing impurities interfering with detection of the sample solution.

Preferably, the quick extraction kit is one wherein a density of the first powder mixture layer in the pipe is 0.7 to 1.3 g/cm³.

Preferably, the quick extraction kit is one wherein a porosity of the first powder mixture layer in the pipe is 35% to 70%.

Preferably, the quick extraction kit is one wherein a weight of the first powder mixture layer is 0.4 g to 5 g, and a weight of the second powder mixture layer is 0.2 g to 1.6 g and less than the weight of the first powder mixture layer.

Preferably, the quick extraction kit is one wherein an area of the first powder mixture layer in the pipe is 0.6 to 7.1 cm² and a height thereof is 1 to 8 cm, an area of the second powder mixture layer in the pipe is 0.6 to 7.1 cm² and a height thereof is 0.23 to 3 cm and lower than the height of the first powder mixture layer.

Preferably, the quick extraction kit is one wherein the second powder mixture layer has components, comprising 0.01 to 0.5 g of PSA powder, 0.2 to 1 g of anhydrous magnesium sulfate powder and 0.001 to 0.1 g of graphitized carbon black powder.

The method for obtaining a primary test liquid from an agricultural sample comprises the following steps: homogenizing the agricultural sample to get fragments of the agricultural sample; shaking the homogenized fragments of the agricultural sample with an extraction solvent to obtain a sample solution, wherein each 1±0.03 g of fragments of the agricultural sample are need to be added into 1 to 10 mL of the extraction solution; adding the sample solution into said pipe of quick extraction kit of claim 1; and driving the sample solution in the pipe to flow through the first powder mixture layer and the second powder mixture layer in sequence to export the primary test liquid from the output port of the pipe.

Preferably, said method is one wherein a flow velocity of the sample solution is limited in a range of 0.01 to 0.2 mL/sec.

Preferably, said method is one wherein the extraction solvent is an acetonitrile solution or an acetonitrile solution containing acetic acid.

Comparing with various solid phase extraction columns and the QuEChERS method in the prior art as above-mentioned, the quick extraction kit and the method of obtaining a primary test liquid from an agricultural sample with the quick extraction kit in accordance with the present invention significantly reduce the time to obtain the primary test liquid from the sample and therefore facilitate the whole procedure of detecting pesticide residues in agricultural products to obviate the problem due to the incapability of techniques in the prior art to quickly obtain the result of detection.

### Description of the Drawings

FIG. 1 is a schematic diagram of a quick extraction kit according to a preferred embodiment of the present invention.
FIG. 2 is another schematic diagram of a quick extraction kit according to a preferred embodiment of the present invention.
FIG. 3 is a schematic diagram of a quick extraction kit according to another preferred embodiment of the present invention.
FIG. 4 is another schematic diagram of a quick extraction kit according to another preferred embodiment of the present invention.

### Substantial Description of the Embodiments

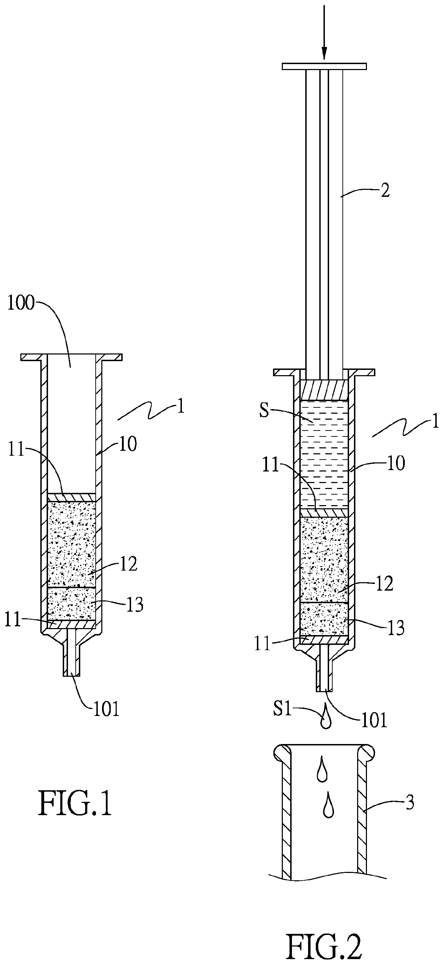

The following detailed description provides further explanation accompanied with embodiments so that the present invention be comprehensible and practicable in view of a person skilled in the art whereas the embodiments are exemplary and intended in no way to limit the scope of the present invention. FIG. 1 is a preferred embodiment of this invention, a quick extraction kit 1 comprises a pipe 10, a first powder mixture layer 12 filled in the pipe 10 and a second powder mixture layer 13 filled in the pipe 10. The pipe 10 is preferably a circular pipe. The pipe 10 has an output port 101 located at the bottom of the pipe 10 and an input port 100 located at the top of the pipe 10. The first powder mixture layer 12 is located below the bottom of the input port 100. The second powder mixture layer 13 is located below the first powder mixture layer 12 and above the output port 101. Besides, this invention further comprises two filter pads 11, one of the filter pads 11 is fixed on the top surface of the first powder mixture layer 12, and the other filter pad 11 is fixed on the bottom surface of the second powder mixture layer 13. The top surface of the second powder mixture layer 13 may directly contact with the first powder mixture layer 12. Alternatively, a filter pads is inserted between the first powder mixture layer 12 and the second powder mixture layer 13 (not shown in FIG. 1).

The quick extraction kit 1 mentioned above is used in a procedure of detecting pesticide residues in agricultural products. This procedure comprises the method of taking a primary test liquid from an agricultural sample by the quick extraction kit, the method comprises the following Steps a to d.
Step a: homogenizing the agricultural sample by a homogenizer so as to treat the agricultural sample to form fragments of the agricultural sample. The agricultural sample is taken from vegetables, fruits, crops, dried beans, tea leaves, spice and other herbaceous plants, for the detecting sample of pesticide residues detection.
Step b: adding an extraction solvent into the fragments of the agricultural sample and shaking strongly to obtain a sample solution S. Each 1±0.03 gram of fragments of the agricultural sample needs to add 1 to 10 mL of the extraction solvent. The extraction solvent is selected from acetonitrile solution or acetonitrile solution containing acid. Each 1±0.03 gram of fragments of the agricultural sample is preferably added said 5 mL of the extraction solvent. The extraction solvent is preferably an acetonitrile solution containing 1% acetic acid.
Step c: adding the sample solution S into the pipe 10 of the quick extraction kit 1, shown as FIG. 2.
Step d: driving the sample solution S in the pipe 10 to flow through the first powder mixture layer 12 and the second powder mixture layer 13 in sequence so as to export the primary test liquid from the output port 101 of the pipe 10. One of the preferred ways for driving the sample solution S to flow through the pipe is directly pressing the sample solution S by a piston rod 2 to drive the sample solution S in the pipe 10 to flow through the first powder mixture layer 12 and the second powder mixture layer 13 in sequence. In addition, the air exhausting method also can be used to drive the sample solution S in the pipe 10 to flow through the first powder mixture layer 12 and the second powder mixture layer 13 in sequence. In the air exhausting method, which using a suction device, containing a vacuum pump (not shown in figures) to connect the output port 101 of the pipe 10, is for sucking the sample solution S in the pipe 10 to flow out of the output port 101. A flow velocity of the sample solution S is limited in a range of 0.01 to 0.2 mL/sec, preferably 0.05 ml/sec. The filter pad 11 mentioned above should be a filter pad without affecting the flow velocity.

The powder mixture of the first powder mixture layer 12 is able to absorb most of water of the sample solution S and buffer the pH value of the sample solution S. Therefore, most of water of the sample solution S is remained in the first powder mixture layer 12 after the sample solution S flows through the first powder mixture layer 12 and the pH value is kept in a range about 4 to 8 so that the sample solution S would not have an extreme pH value. Second, the second powder mixture layer 13 is able to absorb the rest water of the sample solution and impurities, such as organic acid or pigment, which interferes with the detected result of instruments when the sample solution S flows through the second powder mixture layer 13. Therefore, after the sample solution S flows through the second powder mixture layer 13, the sample solution S becomes a primary test liquid S1 without impurities or with few impurities. The primary test liquid S1 is collected in a tube 3.

The primary test liquid S1 can be directly detected by a liquid chromatography/tandem mass spectrometer or a gas chromatography/tandem mass spectrometer to ensure whether the pesticide residues of the sample comply with a requirement. Alternatively, the primary test liquid S1 may firstly be treated by a step of air-drying the primary test liquid S1 and then the primary test liquid S1 only remains a little water, a step of adding methanol, acetone or hexane, a step of adding formic acid and a step of filtering by a filter membrane in sequence, and then detected by a liquid chromatography/tandem mass spectrometer or a gas chromatography/tandem mass spectrometer.

Preferably, total volume of the powder agent for the first powder mixture layer 12 is 0.87 cm³, and total weight of the first powder mixture layer 12 is 2 grams. The pipe 10 has an inner diameter degrees selected on demand, and so the first powder mixture layer 12 has not been pressed tightly and is loose or fluffy during a process of being filled in the pipe 10 with selected inner diameter degrees. Area of the first powder mixture layer 12 in the pipe 10 is about 1.13 cm², and height of the first powder mixture layer 12 is about 2.05 cm. Thus, total volume of the first powder mixture layer 12 is about 2.317 cm³, and density of the first powder mixture layer 12 is about 0.863 g/cm³. A porosity of the first powder mixture layer 12 is about 50% to 62%, so that the sample solution S flowing through the first powder mixture layer 12 would not have the problem of blockade or flowing too fast. Therefore, the flow velocity of the sample solution S flowing through the first powder mixture layer 12 can be controlled in an expected range. It makes most of water of the sample solution S able to be removed in the first powder mixture layer 12.

The description above is one preferred embodiment and not limits this invention. A weight of the first powder mixture layer 12 is preferably 0.4 to 5 grams. A density of the first powder mixture layer 12 filled in the pipe 10 is preferably 0.7 to 1.3 g/cm³. In view of volume, an area of the first powder mixture layer 12 filled in the pipe 10 is preferably 0.6 to 7.1 cm². A height of the first powder mixture layer 12 filled in the pipe 10 is preferably 1 to 8 cm. Besides, in view of porosity, a total porosity of the first powder mixture layer 12 filled in the pipe 10 is preferably 35 to 70%.

The above total porosity = (the total volume of the first powder mixture layer 12 filled in the pipe 10 - the real volume of the first powder mixture layer 12) / (the total volume of the first powder mixture layer 12 filled in the pipe 10) × 100%.

In the present invention, powder components of the first powder mixture layer 12 comprise anhydrous magnesium sulfate, sodium chloride, trisodium citrate and disodium hydrogen citrate. Furthermore, the first powder mixture layer 12 preferably consists of 1.23 gram of anhydrous magnesium sulfate powder, 0.31 gram of sodium chloride powder, 0.31 gram of trisodium citrate powder and 0.15 gram of disodium hydrogen citrate powder, but the invention is not limited to this. For example, 0.2 to 2 grams of anhydrous magnesium sulfate powder, 0.1 to 1 gram of sodium chloride powder, 0.1 to 1 gram of trisodium citrate powder and 0.5 to 1 gram of disodium hydrogen citrate are preferred.

In this invention, a weight of the second powder mixture layer 13 is preferably 0.2 gram to 1.6 gram, and the weight of the second powder mixture layer 13 is preferably less than the weight of the first powder mixture layer 12. However, 0.2 to 1.6 gram is also a preferred weight of the second powder mixture layer 13. In view of volume, it is preferred that an area and a height of the second powder mixture layer 13 in the pipe 10 are 1.13 cm² and 0.8 cm or an area and a height of the second powder mixture layer 13 in the pipe 10 are 0.6 to 7.1 cm² and 0.23 to 3 cm, wherein the height of the second powder mixture layer 13 is lower than the height of the first powder mixture layer 12 in the pipe 10.

When the agricultural sample is selected from general vegetables and fruits, powder components of the second powder mixture layer 13 comprise a PSA (primary secondary amine) powder and an anhydrous magnesium sulfate powder. Furthermore, the second powder mixture layer 13 consists of 0.1 gram of PSA powder and 0.6 gram of anhydrous magnesium sulfate powder but the invention is not limited to this example. For example, 0.01 to 0.5 gram of PSA powder and 0.2 to 1 gram of anhydrous magnesium sulfate powder are also preferred. When the agricultural sample is selected from vegetables and fruits that contain high quantity of chlorophyll, powder components of the second powder mixture layer 13 comprise a PSA powder, an anhydrous magnesium sulfate powder, and a graphitized carbon black (GCB) powder. Furthermore, the second powder mixture layer 13 consists of 0.1 gram of PSA powder, 0.5925 gram of anhydrous magnesium sulfate powder, and 0.075 gram of GCB powder but the invention is not limited to this example. For example, 0.01 to 0.5 gram of PSA powder and 0.2 to 1 gram of anhydrous magnesium sulfate powder, and 0.001 to 0.1 gram GCB powder are also preferred. The preferred ratio of weight of GCB powder and anhydrous magnesium sulfate powder is about 1/79. The amount of the anhydrous magnesium sulfate powder of the second powder mixture layer 13 is less than the amount of the anhydrous magnesium sulfate powder of the first powder mixture layer 12.

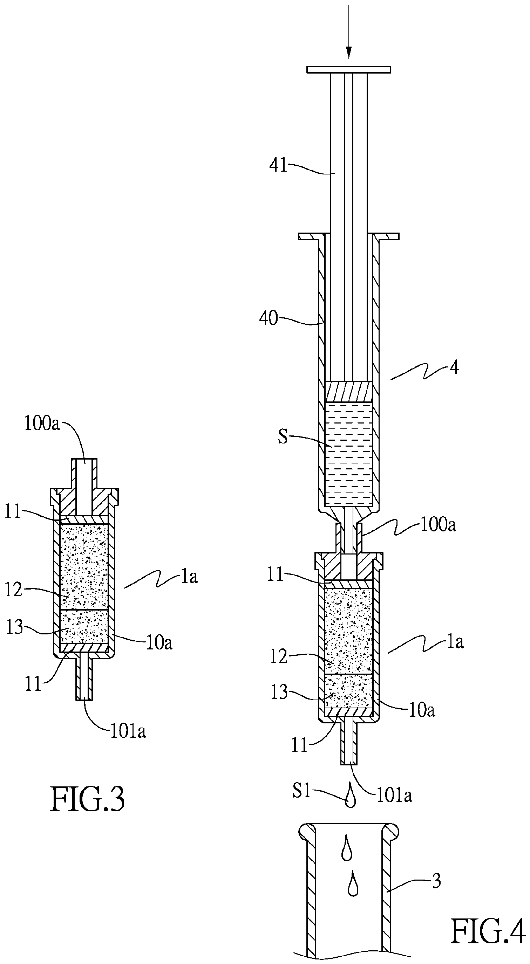

FIG. 3 and FIG. 4 show another preferred embodiments of this invention, the pipe 10a of the quick extraction kit 1a in this embodiment is slightly different from the pipe 10 in form. The pipe 10a also comprises an input port 100a and an output port 101a. The pipe 10a is also set in two pads 11, a first powder mixture layer 12 and a second powder mixture layer 13. A difference therebetween is that the sample solution S is added in a tube 40 of an injection tube 4, and a bottom of the tube 40 connects with the input port 100a. When one directly presses the sample solution S by a piston rod 41 of the injection tube 4, the sample solution S is immediately injected into the pipe 10a to flow through the first powder mixture layer 12 and the second powder mixture layer 13 in sequence to become the primary test liquid S1, which is then collected in the tube 3.

From the above description, the sample solution S consisting of the fragments of the sample and the extraction solution is able to be directly extracted by the quick extraction kit 1 or 1a to obtain the primary test liquid. Compared with the conventional QuEChERS method, the process of obtaining the primary test liquid by the quick extraction kit 1 or 1a gets rid of twice treatments of shaking and twice treatments of centrifugation. Therefore, it significantly decreases the time of obtaining the primary test liquid from the sample by the quick extraction kit 1 or 1a. The speed of the procedure of detecting pesticide residues is also significantly enhanced by the quick extraction kit 1 or 1a so that the problem of being unable to quickly obtain the detection result in the prior art is solved.

Besides, in the conventional QuEChERS method, each gram of homogenized sample needs to be added into 1 ml of the extraction solvent (Acetonitrile). In a preferred example of this invention, each gram of homogenized sample needs to be added into 5 ml of the extraction solvent. In other words, a dilution multiple of the QuEChERS method is 1, a dilution multiple of this invention is 5. Therefore, a content of a unit sample of the primary test liquid obtained by the method of this invention (about 0.2 g/mL) is lower than a content of a unit sample of the primary test liquid obtained by the QuEChERS method (about 1 g/mL). It means that an interfered level affected by substrate in the detection result of the primary test liquid obtained by the
method of this invention is significantly lower than that in the detection result of the primary test liquid obtained by the QuEChERS method when the primary test liquid is detected by instruments.

## Claims

1. A quick extraction kit (1, 1a) for a procedure of detecting pesticide residues in agricultural products, comprising:
a pipe (10, 10a), having an output port (101, 101a) located at the bottom of the pipe (10, 10a) and an input port (100, 100a) located at the top of the pipe (10, 10) a, wherein the input port (100, 100a) is configured to receive a sample solution (S), and the sample solution (S) is a mixture solution obtained by a treatment of shaking homogenized fragments of an agricultural sample with an extraction solvent;
a first powder mixture layer (12) filled in the pipe (10, 10a), wherein the first powder mixture layer (12) has components, comprising 0.2 to 2 g of anhydrous magnesium sulfate powder, 0.1 to 1 g of sodium chloride powder, 0.1 to 1 g of trisodium citrate powder and 0.5 to 1 g of disodium hydrogen citrate powder; and
a second powder mixture layer (13) filled in the pipe (10, 10a) and between the first powder mixture layer (12) and the output port (101, 101a), wherein the second powder mixture layer (13) has components, comprising 0.01 to 0.5 g of a primary secondary amine powder and 0.2 to 1 g anhydrous magnesium sulfate powder.

2. The quick extraction kit (1, 1a) of claim 1, wherein a density of the first powder mixture layer in the pipe (10, 10a) is 0.7 to 1.3 g/cm³.

3. The quick extraction kit (1, 1a) of claim 1, wherein a porosity of the first powder mixture layer (12) in the pipe (10, 10a) is 35% to 70%.

4. The quick extraction kit (1, 1a) of claim 1, wherein a weight of the first powder mixture layer (12) is 0.4 g to 5 g, and a weight of the second powder mixture layer (13) is 0.2 g to 1.6 g and less than the weight of the first powder mixture layer (12).

5. The quick extraction kit (1, 1a) of claim 1, wherein a cross-sectional area of the first powder mixture layer (12) in the pipe (10, 10a) is 0.6 to 7.1 cm² and a height thereof is 1 to 8 cm, a cross-sectional area of the second powder mixture layer (13) in the pipe (10, 10a) is 0.6 to 7.1 cm² and a height thereof is 0.23 to 3 cm and lower than the height of the first powder mixture layer (12).

6. The quick extraction kit (1, 1a) of claim 1, wherein the second powder mixture layer (13) has components, comprising 0.01 to 0.5 g of a primary secondary amine powder, 0.2 to 1 g of anhydrous magnesium sulfate powder and 0.001 to 0.1 g of graphitized carbon black powder.

7. A method for obtaining a primary test liquid (S1) from an agricultural sample, comprising:
homogenizing the agricultural sample to get fragments of the agricultural sample;
shaking the homogenized fragments of the agricultural sample with an extraction solvent to obtain a sample solution (S), wherein each 1±0.03 g of fragments of the agricultural sample are added into 1 to 10 mL of the extraction solvent;
adding the sample solution (S) into said pipe (10, 10a) of quick extraction kit (1, 1a) of any one of claims 1 to 6; and
driving the sample solution (S) in the pipe (10, 10a) to flow through the first powder mixture layer and the second powder mixture layer in sequence to export the primary test liquid (S1) from the output port (101, 101a) of the pipe (10, 10a).

8. The method of claim 7, wherein a flow velocity of the sample solution (S) is limited in a range of 0.01 to 0.2 mL/sec.

9. The method of claim 7, wherein the extraction solvent is an acetonitrile solution or an acetonitrile solution containing acetic acid.

## Patentansprüche

1. Schnellextraktionssatz (1, 1a) für ein Verfahren zum Nachweis von Pestizidrückständen in landwirtschaftlichen Erzeugnissen, welcher umfasst:
- ein Rohr (10, 10a), welches eine am Boden des Rohres (10, 10a) befindliche Austrittsöffnung (101, 101a) und eine am Oberteil des Rohres (10, 10a) befindliche Eintrittsöffnung (100, 100a) aufweist, wobei die Eintrittsöffnung (100, 100a) dergestalt ausgelegt ist, dass sie die Probelösung (S) aufnimmt, und wobei die Probelösung (S) ein Lösungsgemisch ist, welches durch eine Behandlung erhalten wird, die darin besteht, dass homogenisierte Bruchstücke einer landwirtschaftlichen Probe mit einem Extraktionslösemittel geschüttelt werden;
- eine erste Schicht (12) eines Pulvergemischs, welches in das Rohr (10, 10a) gefüllt wird, wobei die erste Pulvergemischschicht (12) Bestandteile aufweist, welche 0,2 bis 2 g wasserfreies pulverförmiges Magnesiumsulfat, 0,1 bis 1 g pulverförmiges Natriumchlorid, 0,1 bis 1 g pulverförmiges Trinatriumcitrat und 0,5 bis 1 g pulverförmiges Dinatriumhydrogencitrat umfassen; und
eine zweite Schicht (13) eines Pulvergemischs, welches in das Rohr (10, 10a) und zwischen die erste Pulvergemischschicht (12) und die Austrittsöffnung (101, 101a) gefüllt wird, wobei die zweite Pulvergemischschicht (13) Bestandteile aufweist, welche 0,01 bis 0,5 g eines primären/sekundären Amin-Pulvers und 0,2 bis 1 g wasserfreies pulverförmiges Magnesiumsulfat umfassen.

2. Schnellextraktionssatz (1, 1a) nach Anspruch 1, bei welchem die Dichte der ersten Pulvergemischschicht im Rohr (10, 10a) 0,7 bis 1,3 g/cm³ beträgt.

3. Schnellextraktionssatz (1, 1a) nach Anspruch 1, bei welchem die Porosität der ersten Pulvergemischschicht (12) im Rohr (10, 10a) 35 % bis 70 % beträgt.

4. Schnellextraktionssatz (1, 1a) nach Anspruch 1, bei welchem das Gewicht der ersten Pulvergemischschicht (12) 0,4 g bis 5 g beträgt und das Gewicht der zweiten Pulvergemischschicht (13) 0,2 g bis 1,6 g beträgt und geringer als das Gewicht der ersten Pulvergemischschicht (12) ist.

5. Schnellextraktionssatz (1, 1a) nach Anspruch 1, bei welchem die Querschnittsfläche der ersten Pulvergemischschicht (12) im Rohr (10, 10a) 0,6 bis 7,1 cm² beträgt und ihre Höhe zwischen 1 und 8 cm liegt, die Querschnittsfläche der zweiten Pulvergemischschicht (13) im Rohr (10, 10a) 0,6 bis 7,1 cm² beträgt und ihre Höhe zwischen 0,23 und 3 cm liegt und niedriger ist als die Höhe der ersten Pulvergemischschicht (12).

6. Schnellextraktionssatz (1, 1a) nach Anspruch 1, bei welchem die zweite Pulvergemischschicht (13) Bestandteile aufweist, welche 0,01 bis 0,5 g eines primären/sekundären Amin-Pulvers, 0,2 bis 1 g wasserfreies pulverförmiges Magnesiumsulfat und 0,001 bis 0,1 g pulverförmiges grafitiertes Carbon-Black umfasst.

7. Verfahren zur Gewinnung einer primären Testflüssigkeit (S1) aus der landwirtschaftlichen Probe, welches umfasst:
die Homogenisierung der landwirtschaftlichen Probe, um Bruchstücke dieser landwirtschaftlichen Probe zu erhalten;
das Schütteln der homogenisierten Bruchstücke der landwirtschaftlichen Probe mit einem Extraktionslösemittel, um eine Probelösung (S) zu erhalten, wobei jeweils 1±0,03 g an Bruchstücken der landwirtschaftlichen Probe auf 1 bis 10 ml des Extraktionslösemittels gegeben werden;
die Zugabe der Probelösung (S) in das genannte Rohr (10, 10a) des Schnellextraktionssatzes (1, 1a) nach irgendeinem der Ansprüche 1 bis 6; und
die Beaufschlagung der Probelösung (S) in dem Rohr (10, 10a), damit diese nach und nach durch die erste Pulvergemischschicht und die zweite Pulvergemischschicht strömt, um die primäre Testflüssigkeit (S1) aus der Ausflussöffnung (101, 101a) des Rohres (10, 10a) auszutreiben.

8. Verfahren nach Anspruch 7, bei welchem die Strömungsgeschwindigkeit der Probelösung (S) auf einen Bereich von 0,01 bis 0,2 ml/s begrenzt ist.

9. Verfahren nach Anspruch 7, bei welchem das Extraktionslösemittel eine Acetonitrillösung oder eine Acetonitrillösung, welche Essigsäure enthält, ist.

## Revendications

1. Kit d'extraction rapide (1, 1a) pour une procédure de détection de résidus de pesticides dans des produits agricoles, comprenant :
une conduite (10, 10a), ayant un orifice de sortie (101, 101a) situé en bas de la conduite (10, 10a) et un orifice d'entrée (100, 100a) situé en haut de la conduite (10, 10a), où l'orifice d'entrée (100, 100a) est conçu pour recevoir une solution échantillon (S) et la solution échantillon (S) est une solution mixte obtenue par un traitement consistant à secouer des fragments homogénéisés d'un échantillon agricole avec un solvant d'extraction ;
une couche d'un premier mélange poudreux (12) garnissant la conduite (10, 10a), où la couche du premier mélange poudreux (12) a des composants comprenant de 0,2 à 2 g d'une poudre de sulfate de magnésium anhydre, de 0,1 à 1 g d'une poudre de chlorure de sodium, de 0,1 à 1 g d'une poudre de citrate trisodique et de 0,5 à 1 g d'une poudre d'hydrogénocitrate disodique ; et
une couche d'un deuxième mélange poudreux (13) garnissant la conduite (10, 10a) et entre la couche du premier mélange poudreux (12) et l'orifice de sortie (101, 101a), où la couche du deuxième mélange poudreux (13) a des composants comprenant de 0,01 à 0,5 g d'une poudre d'une amine primaire-secondaire et de 0,2 à 1 g d'une poudre de sulfate de magnésium anhydre.

2. Kit d'extraction rapide (1, 1a) de la revendication 1, où une densité de la couche du premier mélange poudreux dans la conduite (10, 10a) va de 0,7 à 1,3 g/cm³.

3. Kit d'extraction rapide (1, 1a) de la revendication 1, où une porosité de la couche du premier mélange poudreux (12) dans la conduite (10, 10a) va de 35 % à 70 %.

4. Kit d'extraction rapide (1, 1a) de la revendication 1, où un poids de la couche du premier mélange poudreux (12) va de 0,4 g à 5 g et un poids de la couche du deuxième mélange poudreux (13) va de 0,2 g à 1,6 g et est inférieur au poids de la couche du premier mélange poudreux (12).

5. Kit d'extraction rapide (1, 1a) de la revendication 1, où une superficie de la section transversale de la couche du premier mélange poudreux (12) dans la conduite (10, 10a) va de 0,6 à 7,1 cm² et une hauteur de celle-ci va de 1 à 8 cm, et une superficie de la section de la couche du deuxième mélange poudreux (13) dans la conduite (10, 10a) va de 0,6 à 7,1 cm² et une hauteur de celle-ci va 0,23 à 3 cm et est inférieure à la hauteur de la couche du premier mélange poudreux (12).

6. Kit d'extraction rapide (1, 1a) de la revendication 1, où la couche du deuxième mélange poudreux (13) a des composants comprenant de 0,01 à 0,5 g d'une poudre d'une amine primaire-secondaire, de 0,2 à 1 g d'une poudre de sulfate de magnésium anhydre et de 0,001 à 0,1 g d'une poudre de noir de carbone graphitisé.

7. Procédé permettant d'obtenir un liquide d'essai primaire (S1) à partir d'un échantillon agricole, comprenant:
l'homogénéisation de l'échantillon agricole pour produire des fragments de l'échantillon agricole ;
le secouage des fragments homogénéisés de l'échantillon agricole avec un solvant d'extraction pour obtenir une solution échantillon (S), où chaque 1 ± 0,03 g de fragments de l'échantillon agricole est ajouté à 1 à 10 ml du solvant d'extraction ;
l'addition de la solution échantillon (S) dans ladite conduite (10, 10a) du kit d'extraction rapide (1, 1a) de l'une quelconque des revendications 1 à 6; et
l'entraînement de la solution échantillon (S) dans la conduite (10, 10a) de manière à ce qu'elle traverse en succession la couche du premier mélange poudreux et la couche du deuxième mélange poudreux pour larguer le liquide d'essai primaire (S1) au niveau de l'orifice de sortie (101, 101a) de la conduite (10, 10a).

8. Procédé de la revendication 7, où une vitesse d'écoulement de la solution échantillon (S) est limitée dans une plage qui va de 0,01 à 0,2 ml/s.

9. Procédé de la revendication 7, où le solvant d'extraction est une solution d'acétonitrile ou une solution d'acétonitrile contenant de l'acide acétique.
